(19) Europäisches Patentamt
European Patent Office
Office européen des brevets

(11) **EP 2 270 955 A2**

(12) **EUROPEAN PATENT APPLICATION**

(43) Date of publication:
**05.01.2011 Bulletin 2011/01**

(51) Int Cl.:
***H02K 1/27*** (2006.01)

(21) Application number: **10003158.2**

(22) Date of filing: **24.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **30.06.2009 JP 2009156076**

(71) Applicant: **SANYO ELECTRIC CO., LTD.
Moriguchi-shi, Osaka 570-8677 (JP)**

(72) Inventors:
• **Takezawa, Masaaki
Moriguchi-shi, Osaka 570-8677
(JP)**
• **Yanashima, Toshihito
Moriguchi-shi, Osaka 570-8677
(JP)**
• **Arai, Kazuhiko
Moriguchi-shi, Osaka 570-8677
(JP)**
• **Dei, Yoshikazu
Moriguchi-shi, Osaka 570-8677
(JP)**
• **Adachi, Hidekazu
Moriguchi-shi, Osaka 570-8677
(JP)**

(74) Representative: **Glawe, Delfs, Moll
Patent- und Rechtsanwälte
Postfach 26 01 62
80058 München (DE)**

(54) **Rotor of electric motor**

(57) There is disclosed a rotor of an electric motor, which can decrease the generation of noises while taking the efficiency of the electric motor into consideration.

In the rotor of the electric motor, including a rotor core formed by laminating a plurality of iron plates for the rotor; insertion holes corresponding to magnetic poles of the rotor core and provided along the axial direction of a rotary shaft; and a pair of flat plate-like permanent magnets inserted into each of the insertion holes to constitute the magnetic pole, the pair of permanent magnets are disposed in the form of a slanted roof when seen from the side of the rotary shaft, and $0 < t1/t2 \le 0.15$ is satisfied in which t1 is a distance from the center of a line connecting outer ends of the adjacent permanent magnets to the outer periphery of the rotor core and t2 is a width dimension of each of the permanent magnets.

FIG. 3

EP 2 270 955 A2

**Description**

BACKGROUND OF THE INVENTION

The present invention relates to a structure of a rotor of an electric motor used for a compressor or the like.

Heretofore, this type of electric motor for the compressor is constituted of a ring-shaped stator attached to an inner wall of a sealed container and a rotor disposed on the inner side of the stator. This stator has, for example, a constitution in which stator coils of three phases of U, V and W-phases are directly wound around tooth portions of a stator core formed by laminating a plurality of electromagnetic steel plates.

Moreover, the rotor has a constitution in which a plurality of iron plates for the rotor are laminated and fixed by caulking, thereby forming a rotor core. Furthermore, permanent magnets constituting magnetic poles are inserted into insertion holes formed along the outer peripheral side of this rotor core. In addition, a current is caused to flow through the three-phase stator coils wound around the tooth portions of the stator in order, and a driving force is generated by an interaction between a varying magnetic field of the current and a magnetic field of the permanent magnets (e.g., see Japanese Patent Application Laid-Open No. 2007-174776 (Patent Document 1) or 2008-022666 (Patent Document 2)).

However, in such an electric motor, heretofore, it has been known that a magnetic flux noticeably varies with respect to the rotation of the rotor and that a large suction force is periodically generated between the tooth portions of the stator core and the magnets of the rotor. Such a large suction force generated periodically has caused a problem that the stator core is deformed, thereby generating noises.

In order to decrease the noises, such a suction force is preferably decreased to suppress the deformation of the rotor core. In this case, the permanent magnets, which have been inserted into the rotor core of the rotor, are disposed on the outer peripheral side of the rotor core, to shorten a distance from each permanent magnet to the outer periphery of the rotor core, whereby magnetic force lines flowing through the rotor core can be decreased, thereby decreasing the suction force. However, characteristics of the magnets accordingly lower, and hence a problem occurs that an efficiency lowers.

SUMMARY OF THE INVENTION

The present invention has been developed to solve such a conventional technical problem, and an object thereof is to provide a rotor of an electric motor which can decrease the generation of noises while taking an efficiency into consideration.

According to a first aspect of the present invention, there is provided a rotor of an electric motor, comprising: a rotor core formed by laminating a plurality of iron plates for the rotor; a pair of insertion holes corresponding to each magnetic pole of the rotor core and provided along the axial direction of a rotary shaft; and a pair of flat plate-like permanent magnets inserted into the insertion holes to constitute the magnetic pole, wherein the pair of insertion holes are disposed in the form of a slanted roof when seen from the side of the rotary shaft, and $0.197 \leq t1/t2 \leq 0.275$ is satisfied in which t1 is the shortest distance from the center of a line connecting outer ends of the adjacent insertion holes to the outer periphery of the rotor core and t2 is a width dimension of each of the permanent magnets.

According to a second aspect of the present invention, there is provided a rotor of an electric motor, comprising: a rotor core formed by laminating a plurality of iron plates for the rotor; a pair of insertion holes corresponding to each magnetic pole of the rotor core and provided along the axial direction of a rotary shaft; and a pair of flat plate-like permanent magnets inserted into the insertion holes to constitute the magnetic pole, wherein the pair of insertion holes are disposed in the form of a slanted roof when seen from the side of the rotary shaft, and $3.15 \text{ mm} \leq t1 \leq 3.85 \text{ mm}$, $14 \text{ mm} \leq t2 \leq 16 \text{ mm}$ are satisfied in which t1 is the shortest distance from the center of a line connecting outer ends of the adjacent insertion holes to the outer periphery of the rotor core and t2 is a width dimension of each of the permanent magnets.

According to a third aspect of the present invention, there is provided a rotor of an electric motor, comprising: a rotor core formed by laminating a plurality of iron plates for the rotor; insertion holes corresponding to magnetic poles of the rotor core and provided along the axial direction of a rotary shaft; and a pair of flat plate-like permanent magnets inserted into each of the insertion holes to constitute the magnetic pole, wherein the insertion holes are formed into such a V-shape as to project toward the outer periphery of the rotor core, and $0.197 \leq t1/t2 \leq 0.275$ is satisfied in which t1 is the shortest distance from the outer end of the insertion hole to the outer periphery of the rotor core and t2 is a width dimension of each of the permanent magnets.

According to a fourth aspect of the present invention, there is provided a rotor of an electric motor, comprising: a rotor core formed by laminating a plurality of iron plates for the rotor; insertion holes corresponding to magnetic poles of the rotor core and provided along the axial direction of a rotary shaft; and a pair of flat plate-like permanent magnets inserted into each of the insertion holes to constitute the magnetic pole, wherein the insertion holes are formed into such a V-shape as to project toward the outer periphery of the rotor core, and $3.15 \text{ mm} \leq t1 \leq 3.85 \text{ mm}$, $14 \text{ mm} \leq t2 \leq 16 \text{ mm}$

are satisfied in which t1 is the shortest distance from the outer end of the insertion hole to the outer periphery of the rotor core and t2 is a width dimension of each of the permanent magnets.

The rotor of the electric motor of a fifth aspect of the present invention is **characterized in that** in any one of the first to fourth aspects of the present invention, the permanent magnets are rare earth magnets.

The rotor of the electric motor of a sixth aspect of the present invention is **characterized in that** in any one of the first to fifth aspects of the present invention, the outer peripheral surface of the rotor core in front of the magnetic pole in a rotating direction thereof is provided with cutout portions.

According to the first aspect of the present invention, in the rotor of the electric motor, comprising the rotor core formed by laminating the plurality of iron plates for the rotor, the pair of insertion holes corresponding to each magnetic pole of the rotor core and provided along the axial direction of the rotary shaft and the pair of flat plate-like permanent magnets inserted into the insertion holes to constitute the magnetic pole, the pair of insertion holes are disposed in the form of the slanted roof when seen from the side of the rotary shaft. Therefore, the pair of permanent magnets can be disposed in the pair of insertion holes in the form of the slanted roof when seen from the side of the rotary shaft, and magnetic force lines generated by the permanent magnets can be scattered. In particular, in the case of $0.197 \leq t1/t2 \leq 0.275$ in which t1 is the shortest distance from the center of the line connecting the outer ends of the adjacent insertion holes to the outer periphery of the rotor core and t2 is the width dimension of each of the permanent magnets, noises can be decreased without excessively deteriorating the efficiency.

According to the second aspect of the present invention, in the rotor of the electric motor, comprising the rotor core formed by laminating the plurality of iron plates for the rotor, the pair of insertion holes corresponding to each magnetic pole of the rotor core and provided along the axial direction of the rotary shaft and the pair of flat plate-like permanent magnets inserted into the insertion holes to constitute the magnetic pole, the pair of insertion holes are disposed in the form of the slanted roof when seen from the side of the rotary shaft. Therefore, the pair of permanent magnets can be disposed in the pair of insertion holes in the form of the slanted roof when seen from the side of the rotary shaft, and magnetic force lines generated by the permanent magnets can be scattered. In particular, in the case of $3.15 \text{ mm} \leq t1 \leq 3.85 \text{ mm}$, $14 \text{ mm} \leq t2 \leq 16 \text{ mm}$ in which t1 is the shortest distance from the center of the line connecting the outer ends of the adjacent insertion holes to the outer periphery of the rotor core and t2 is the width dimension of each of the permanent magnets, noises can be decreased without excessively deteriorating the efficiency.

According to the third aspect of the present invention, in the rotor of the electric motor, comprising the rotor core formed by laminating the plurality of iron plates for the rotor, the insertion holes corresponding to the magnetic poles of this rotor core and provided along the axial direction of the rotary shaft and the pair of flat plate-like permanent magnets inserted into each of the insertion holes to constitute the magnetic pole, the insertion holes are formed into such a V-shape as to project toward the outer periphery of the rotor core. Therefore, the pair of permanent magnets can be disposed in each insertion hole in the form of the slanted roof when seen from the side of the rotary shaft, and magnetic force lines generated by the permanent magnets can be scattered. In particular, in the case of $0.197 \leq t1/t2 \leq 0.275$ in which t1 is the shortest distance from the outer end of the insertion hole to the outer periphery of the rotor core and t2 is the width dimension of each of the permanent magnets, noises can be decreased without excessively deteriorating the efficiency.

According to the fourth aspect of the present invention, in the rotor of the electric motor, comprising the rotor core formed by laminating the plurality of iron plates for the rotor, the insertion holes corresponding to the magnetic poles of this rotor core and provided along the axial direction of the rotary shaft and the pair of flat plate-like permanent magnets inserted into each of the insertion holes to constitute the magnetic pole, the insertion holes are formed into such a V-shape as to project toward the outer periphery of the rotor core. Therefore, the pair of permanent magnets can be disposed in each insertion hole in the form of the slanted roof when seen from the side of the rotary shaft, and magnetic force lines generated by the permanent magnets can be scattered. In particular, in the case of $3.15 \text{ mm} \leq t1 \leq 3.85 \text{ mm}$, $14 \text{ mm} \leq t2 \leq 16 \text{ mm}$ in which t1 is the shortest distance from the outer end of the insertion hole to the outer periphery of the rotor core and t2 is the width dimension of each of the permanent magnets, noises can be decreased without excessively deteriorating the efficiency.

In particular, the above aspects of the present invention are effective in a case where as in the fifth aspect of the present invention, the permanent magnets are the rare earth magnets having high material cost and processing cost and formed mainly into a planar shape. Furthermore, in the rare earth permanent magnets, the holding force of the magnets increases, and the excitation of a stator due to the suction force increases as compared with ferrite permanent magnets. Therefore, the permanent magnets have a problem that the vibration thereof is transmitted to a surrounding area, thereby increasing the noises. However, according to any one of the first to fourth aspects of the present invention, the problem of the noises can be suppressed. Therefore, the first to fourth aspects of the present invention become more valid and effective in a case where the permanent magnets are the rare earth magnets as in the fifth aspect of the present invention.

Furthermore, when the outer peripheral surface of the rotor core in front of the magnetic pole in the rotating direction thereof is provided with the cutout portions as in the sixth aspect of the present invention, the variance of magnetic force lines can be optimized, and the vibration of the stator can be decreased.

## BRIEF DESCRIPTION OF THE DRAWINGS

FIG. 1 is a vertical side view of a compressor to which the present invention is applied;
FIG. 2 is a plan view of a stator core of a stator of an electric motor of FIG. 1;
FIG. 3 is a plan view of a rotor according to one embodiment of the present invention (Embodiment 1);
FIG. 4 is a side view of the rotor of FIG. 3;
FIG. 5 is a partially enlarged view in a state where permanent magnets are inserted into an insertion hole of the rotor of FIG. 3;
FIG. 6 is an enlarged view of a broken line part of FIG. 5;
FIG. 7 is a diagram showing a relation between the vibration value of the stator core and an efficiency thereof with respect to (t1/t2);
FIG. 8 is a diagram showing positional relations between a stator and the permanent magnets of the rotor at rotation angles;
FIG. 9 is a diagram showing magnetic fluxes of an electric motor comprising a conventional rotor and an electric motor comprising a rotor of the present invention at the rotation angles of FIG. 8;
FIG. 10 is a partially enlarged view of FIG. 9;
FIG. 11 is a diagram showing a three-phase sinusoidal wave;
FIG. 12 is a diagram showing the variance of a suction force;
FIG. 13 is a plan view of a rotor according to another embodiment of the present invention;
FIG. 14 is a partially enlarged view in a state where permanent magnets are inserted into an insertion hole of the rotor of FIG. 13; and
FIG. 15 is an enlarged view of a broken line part of FIG. 14.

## DETAILED DESCRIPTION OF THE PREFERRED EMBODIMENTS

Hereinafter, embodiments of the present invention will be described in detail with reference to the drawings.

(Embodiment 1)

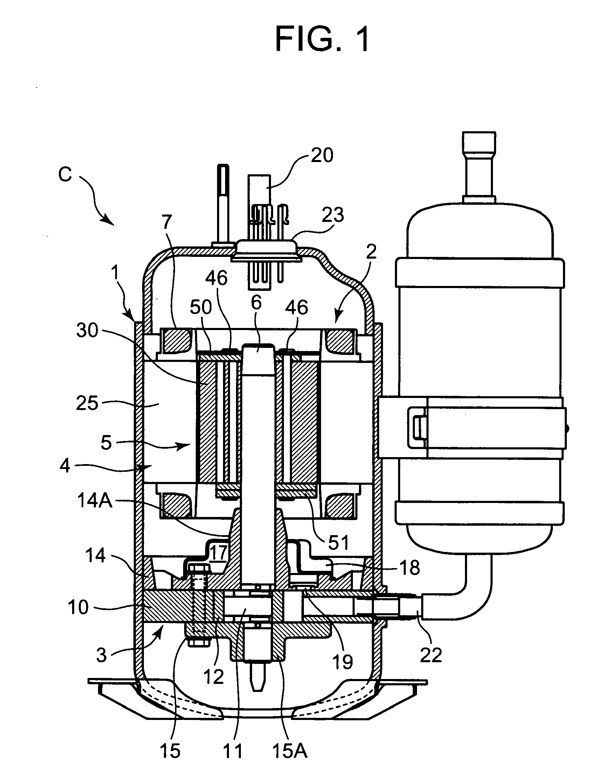

FIG. 1 is a vertical side view of a compressor C to which a rotor of an electric motor of the present invention is applied. In FIG. 1, reference numeral 1 is a sealed container. An electric motor (a brushless DC motor) 2 is received on the upside in the container, and a compression element 3 driven and rotated by the electric motor 2 is received on the downside in the container. The sealed container 1 is beforehand divided into two parts where the electric motor 2 and the compression element 3 are received, and then hermetically closed by high-frequency sealing. It is to be noted that the present embodiment will be described by use of a rotary compressor as the compressor C, but the present invention is not limited to the compressor, and is effective even in a case where, for example, a reciprocating or scroll type compressor or the like is used.

The electric motor 2 is constituted of a stator 4 attached to an inner wall of the sealed container 1, and a rotor 5 disposed on the inner side of the stator 4 and supported rotatably around a rotary shaft 6. It is to be noted that in the electric motor 2 of the present embodiment, a four-pole permanent magnet rotary type electric motor is used in which a ratio between the number of poles of the rotor 5 and the number of slots of the stator 4 is 2:3.

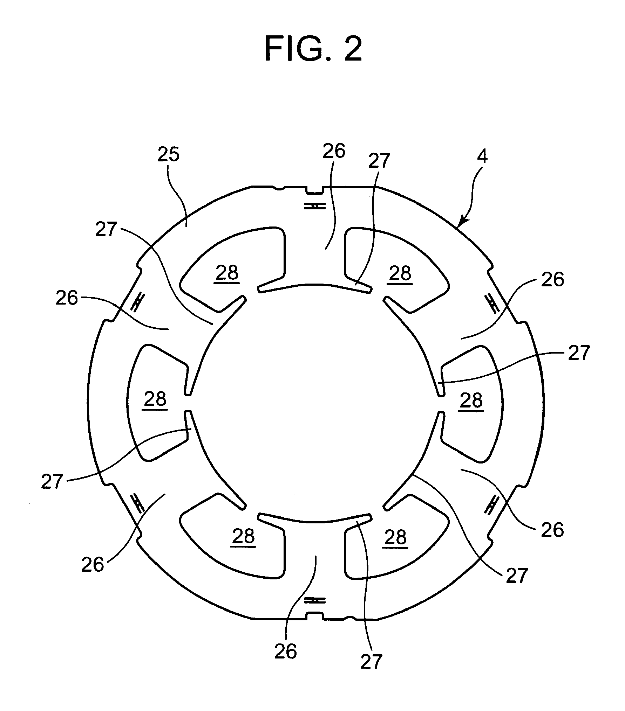

As shown in FIG. 2, the stator 4 is constituted of a stator core 25 having a constitution in which electromagnetic steel plates are laminated, and a stator coil 7 (not shown in FIG. 2) wound around the stator core 25. Specifically, the stator core 25 is provided with tooth portions 26 each having a predetermined width, and the tip of each of the tooth portions 26 is extended to both arms, thereby forming a tooth tip portion 27 along the surface of the rotor 5. The stator coil 7 for excitation is directly wound around each tooth portion 26 by use of a space of a slot portion 28, and magnetic poles of the stator 4 are formed by a concentrated direct winding system. The stator coil 7 has a three-phase constitution of U, V and W-phases.

On the other hand, the compression element 3 is constituted of a cylinder 10 in which a compression chamber is formed; a roller 12 fitted into an eccentric portion 11 provided on the rotary shaft 6 to eccentrically rotate in the cylinder 10; a vane (not shown) which abuts on the roller 12 to partition the compression chamber of the cylinder 10 into a low pressure chamber side and a high pressure chamber side; an upper support member 14 which closes the open surface of the cylinder 10 on one side thereof (the upside in FIG. 1) and which is also used as a bearing 14A of the rotary shaft 6; and a lower support member 15 which closes the open surface of the cylinder on the other side thereof (the downside in FIG. 1) and which is also used as a bearing 15A of the rotary shaft 6.

In FIG. 1, reference numeral 17 is a discharge muffler chamber. The discharge muffler chamber 17 is formed by covering a part of the upper support member 14 on the side of the electric motor 2 (the upside) with a cover 18. The inside of the discharge muffler chamber 17 is connected to the high pressure chamber side of the cylinder 10 via a discharge port 19. Moreover, the cover 18 is provided with a communication hole (not shown) which connects the inside of the discharge muffler chamber 17 to the inside of the sealed container 1, and a refrigerant in the discharge muffler chamber 17 is discharged into the sealed container 1 through the communication hole.

Moreover, reference numeral 20 is a refrigerant discharge tube for discharging, to the outside of the compressor C, a high-temperature high-pressure refrigerant gas discharged into the sealed container 1. The refrigerant discharge tube is attached to the upper end of the sealed container 1. Reference numeral 22 is a refrigerant introducing tube for introducing a low-temperature low-pressure refrigerant into the cylinder 10 from the outside of the compressor C. Moreover, reference numeral 23 is a terminal for supplying a power from the outside of the sealed container 1 to the stator coil 7 of the stator 4, and the terminal is attached around the center of the upper end of the sealed container 1. The terminal 23 is connected to the stator coil 7 via a lead wire (not shown).

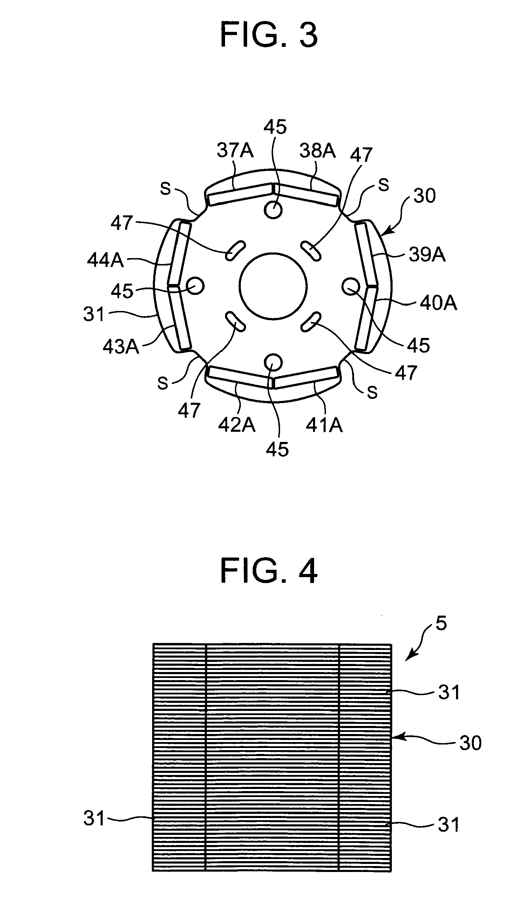

Next, the rotor 5 of the electric motor 2 will be described in detail. FIG. 3 is a plan view of the rotor 5 of one embodiment to which the present invention is applied (a state before permanent magnets are inserted), and FIG. 4 is a side view of the rotor 5 of FIG. 3.

In the drawing, reference numeral 30 is a rotor core. Electromagnetic steel plates having thicknesses of 0.35 mm to 0.50 mm are punched into a shape shown in FIG. 3, and a plurality of resultant rotor iron plates 31 are stacked, mutually caulked and integrally laminated. If the thickness of the rotor iron plate 31 is excessively increased, a problem occurs that an eddy current loss increases. This eddy current loss is a loss caused by the generation of the current based on the variance of a magnetic flux in the core 30. The eddy current loss can be decreased by decreasing the thickness of the core 30. However, if the thickness of the rotor iron plate 31 is excessively decreased, it becomes difficult to process the plate, or a problem occurs that processability and processing precision lower. In consideration of such problems, it is preferable to use the rotor iron plate 31 having a thickness of 0.35 mm to 0.50 mm as described above, and in the present embodiment, the rotor iron plate 31 having a thickness of 0.35 mm is used.

In FIG. 3, reference numerals 37A to 44A are insertion holes into which permanent magnets 37 to 44 are inserted. The insertion holes 37A to 44A are provided so as to form pairs at positions corresponding to magnetic poles of the rotor core 30 along the axial direction of the rotary shaft 6. The insertion holes are formed by punching. The permanent magnets 37 to 44 are rare earth magnets formed into a flat plate-like shape, and all the permanent magnets 37 to 44 are formed into the same shape.

Moreover, in the rotor 5, the outer peripheral surface of the rotor core 30 in front of each magnetic pole in the rotating direction thereof is provided with cutout portions S.

It is to be noted that in FIG. 3, reference numerals 45 are through holes into which rivets 46 for integrally combining, with the rotor core 30, nonmagnetic end face members 50, 51 attached to both end faces of the rotor core 30 are inserted. In the present embodiment, four through holes are formed along a concentric circle around the rotary shaft 6 in the rotor core 30 of the permanent magnets 37 to 44 on the side of the rotary shaft 6. Moreover, reference numerals 47 are air holes formed on the rotary shaft 6 side of the through holes 45 and along a concentric circle around the rotary shaft 6 in the rotor core 30.

In the present embodiment, as shown in FIG. 3, the four through holes 45 are disposed with an equal space being left therebetween along the concentric circle on the rotary shaft 6 side of the permanent magnets 37 to 44, and the four air holes 47 are disposed with an equal space being left therebetween along the concentric circle on the rotary shaft 6 side from the through holes 45, and each of the air holes is disposed at a position between the through holes 45. The positions and numbers of the through holes 45 and the air holes 47 are preferably appropriately determined in consideration of the arrangement of the permanent magnets 37 to 44 or the like so that characteristics and efficiency do not lower, and the present invention is not limited to the arrangement and the numbers of them in the present embodiment.

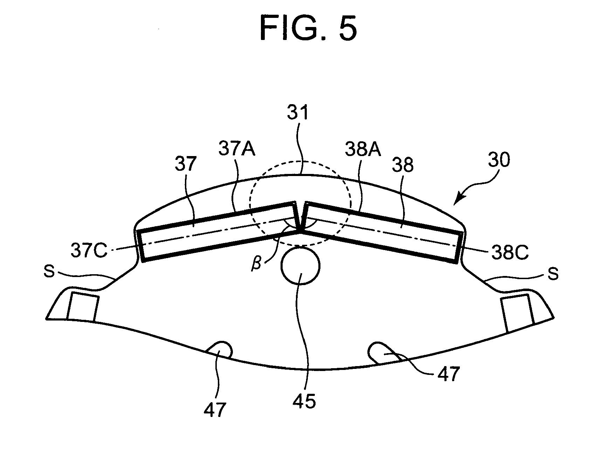

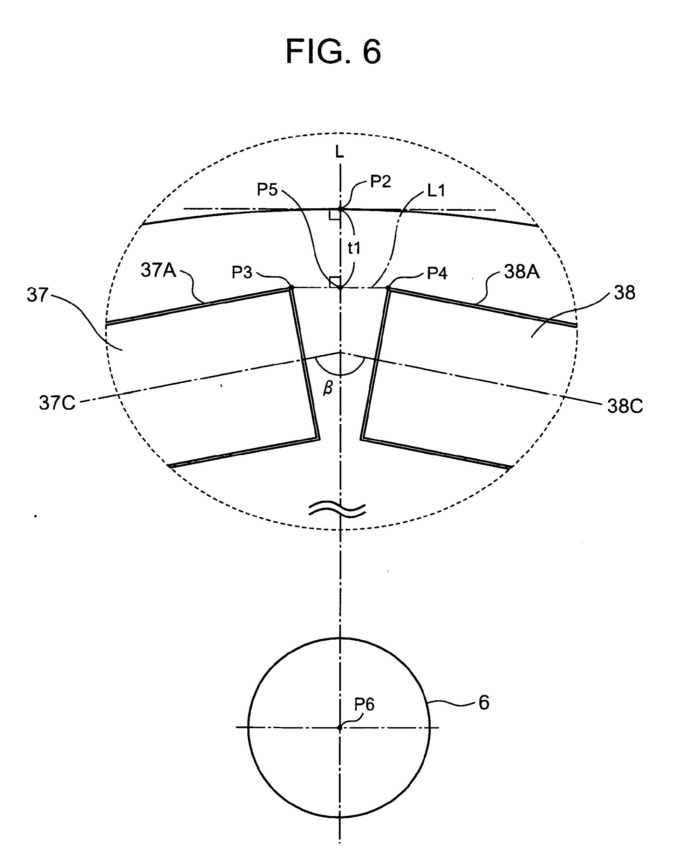

Here, attention is focused on one of four magnetic poles of the rotor core 30, and the pair of insertion holes and the pair of permanent magnets inserted into the insertion holes will be described in detail. FIG. 5 is a partially enlarged view around the insertion holes 37A, 38A of the rotor 5 in a state where the permanent magnets 37 to 44 are inserted into the insertion holes 37A to 44A, respectively, and FIG. 6 is an enlarged view of a broken line part of FIG. 5. Here, with reference to FIGS. 5 and 6, the pair of insertion holes 37A, 38A constituting one of the four magnetic poles of the rotor 5 and the pair of permanent magnets 37, 38 inserted into the insertion holes 37A, 38A will be described, and the description of the other insertion holes 39A to 44A and permanent magnets 39 to 44 inserted into the insertion holes 39A to 44A is omitted. However, the insertion holes 39A to 44A and the permanent magnets 39 to 44 have constitutions and arrangements similar to those of the insertion holes 37A, 38A and the permanent magnets 37, 38.

As shown in FIGS. 5 and 6, a pair of insertion holes 37A, 38A provided corresponding to one magnetic pole of the rotor core 30 are disposed in the form of a slanted roof when seen from the rotary shaft 6 side. A pair of permanent magnets 37, 38 are disposed in the pair of insertion holes 37A, 38A in the form of the slanted roof when seen from the rotary shaft 6 side. As shown in FIG. 6, an angle β at which a center line 37C of the permanent magnet 37 inserted into the insertion hole 37A in a width direction intersects with a center line 38C of the permanent magnet 38 inserted into the insertion hole 38A forming the pair with the insertion hole 37A in the width direction is a predetermined obtuse angle, and this angle is substantially equal to an angle at which the center line of the insertion hole 37A in the width direction intersects with the center line of the insertion hole 38A in the width direction.

In this case, as shown in FIG. 6, the constitution satisfies the following formula (1), in which $t1$ is the shortest distance from a center P5 of a line connecting outer ends P3 and P4 of the adjacent insertion holes 37A, 38A to an outer periphery P2 of the rotor core 30 and $t2$ is the width dimension of each of the permanent magnets 37, 38. It is to be noted that a line L1 connecting the outer end P3 of the permanent magnet 37 to the outer end P4 of the permanent magnet 38 crosses a line L passing an axial center P6 of the rotary shaft 6 and the center P5 of the line L1 at right angles.

$$0.197 \leq t1/t2 \leq 0.275 \ldots (1)$$

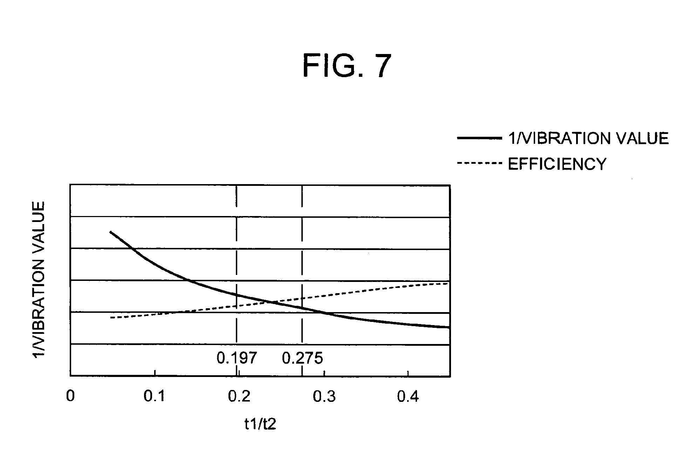

FIG. 7 shows the variances of the vibration value of the stator core 25 and an efficiency with respect to $t1/t2$. In FIG. 7, a solid line shows the vibration value (a value obtained by dividing the vibration value by 1, that is, the inverse number of the vibration value), and a broken line shows the efficiency. As shown by the solid line in FIG. 7, it is seen that the vibration value of the stator core 25 decreases, as the value of $t1/t2$ is small and that the vibration value gradually increases with the increase of the value of $t1/t2$. It is also seen from the broken line of FIG. 7 that the efficiency deteriorates, as the value of $t1/t2$ is small and that the electric motor 2 obtains a high efficiency with the increase of the value of $t1/t2$.

That is, it is seen that when the value of $t1/t2$ is small, the vibration value decreases, but the efficiency deteriorates and that when the value of $t1/t2$ increases, the efficiency improves, but the vibration value increases. Therefore, the above formula (1) is determined in a predetermined range of a value at which the inverse number of the vibration value intersects with the efficiency with respect to the value of $t1/t2$ (10% above/below the intersecting value) as shown in FIG. 7.

Furthermore, in the present embodiment, the insertion holes 37A to 44A and each pair of permanent magnets have such a constitution as to satisfy the following formulas (2), (3).

$$3.15 \text{ mm} \leq t1 \leq 3.85 \text{ mm} \ldots (2)$$

$$14 \text{ mm} \leq t2 \leq 16 \text{ mm} \quad \ldots (3)$$

In the above formula (2), the upper limit value (3.85 mm) is determined from the problem of the vibration, and the lower limit value (3.15 mm) is determined from the problem of the deterioration of the efficiency. Specifically, when $t1$ is decreased, the magnetic force line stepwise passes through the rotor core 30 (i.e., the variance ratio of the magnetic force line flowing through the rotor core 30 decreases). Therefore, it is possible to suppress a large suction force periodically generated among the tooth portions 26 of the stator core 25 and the permanent magnets 37 to 44 of the rotor 5. In consequence, the deformation of the rotor core 30 generated by such a suction force decreases, whereby the noises also decrease, but the magnetic force lines flowing through the rotor core 30 decrease. Accordingly, characteristics of the magnets lower, thereby causing a problem that the efficiency lowers.

On the other hand, when $t1$ is increased, the efficiency improves, but the magnetic force lines passing through the rotor core 30 accordingly increase, whereby the periodic suction force increases, thereby causing a problem that the noises become large. Therefore, in consideration of such problems of the efficiency and noises, $t1$ is preferably set to the range of the above formula (2).

Moreover, as to $t2$ shown in the above formula (3), an upper limit value (i.e., 16 mm) is determined from the problem of the iron loss of the rotor core 30, and a lower limit value (i.e., 14 mm) is determined from the problem of a magnetic flux. Specifically, when $t2$ is larger than 16 mm, the iron loss of the rotor core 30 increases, and the efficiency disadvantageously remarkably deteriorates. Moreover, when $t2$ is further decreased, the above iron loss decreases. However, when the value is smaller than 14 mm, the magnetic flux (the magnetic force line) excessively decreases. Also in this case, a problem occurs that the efficiency remarkably lowers.

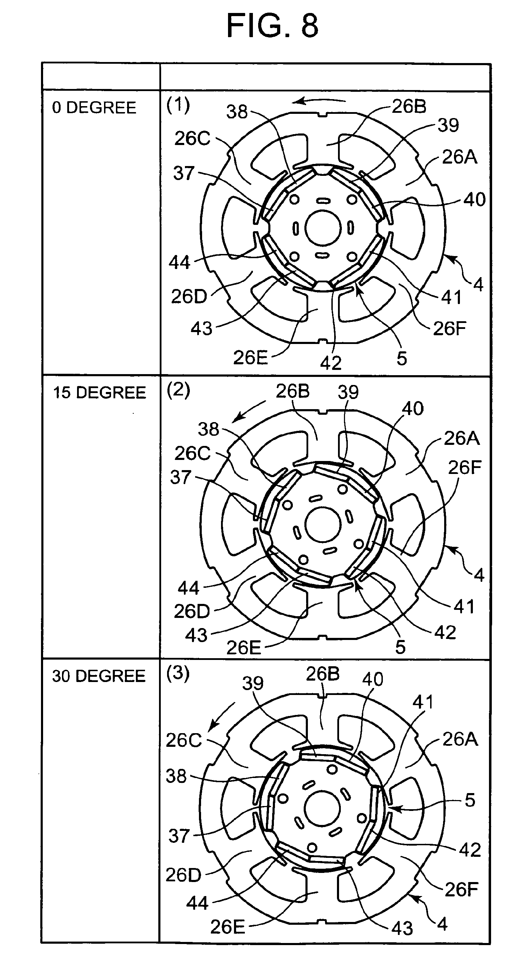

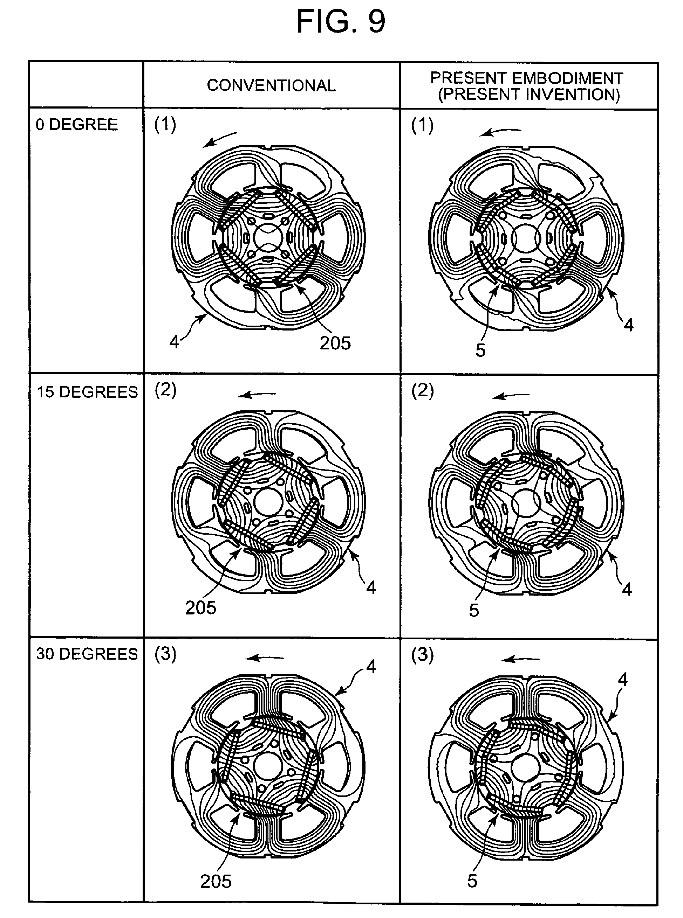

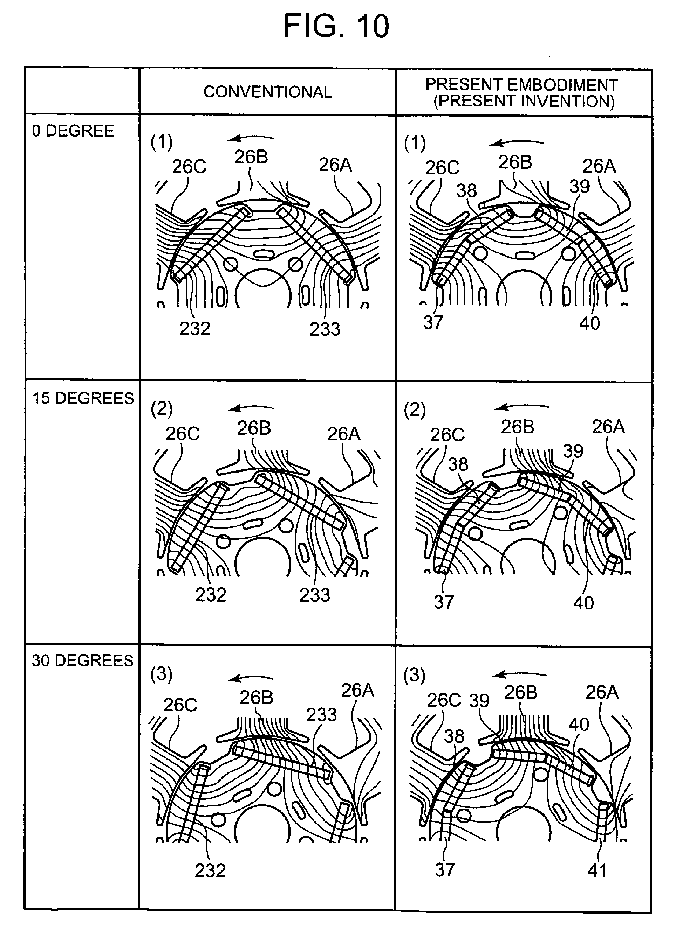

FIG. 8 is a diagram showing the positions of the permanent magnets 37 to 44 in the stator 4 at the respective rotation angles of the rotor 5 in the present embodiment, FIG. 9 is a diagram showing magnetic fluxes at the respective rotation angles shown in FIG. 8, and FIG. 10 is a partially enlarged view of FIG. 9. In this case, the stator coil 7 of the U-phase is directly wound around tooth portions 26A, 26D of the stator core 25, the coil of the V-phase is directly wound around tooth portions 26B, 26E, and the coil of the W-phase is directly wound around tooth portions 26C, 26F. In the diagrams, an arrangement shown in (1) corresponds to a rotation angle of 0 degree of the rotor 5, (2) shows that the rotor 5 has been rotated from (1) in an arrow direction, and (3) shows that the rotor 5 has further been rotated as much as 15 degrees from (2) (the rotor 5 has been rotated as much as 30 degrees from (1)). It is to be noted that in FIGS. 8 to 10, the insertion holes 37A to 44A are omitted. In FIGS. 9 and 10, the right column shows the rotor 5 of the embodiment to which the present invention is applied, and the left column shows a rotor 205 having a conventional structure.

As shown in FIG. 10, at a rotation angle of, for example, 0 degree in (1), in the conventional structure, almost all magnetic force lines of a permanent magnet 232 corresponding to one magnetic pole of the rotor 205 flow through the adjacent tooth portion 26C, but in the structure of the embodiment, an only approximately half of the magnetic force lines of one permanent magnet 38 of the pair of permanent magnets 37, 38 constituting one magnetic pole flows through the tooth portion 26C. Moreover, at a rotation angle of 15 degrees, the magnetic force line flows through the tooth portion 26C in both the conventional structure and the present embodiment, whereby in the embodiment, the magnetic force line varies stepwise.

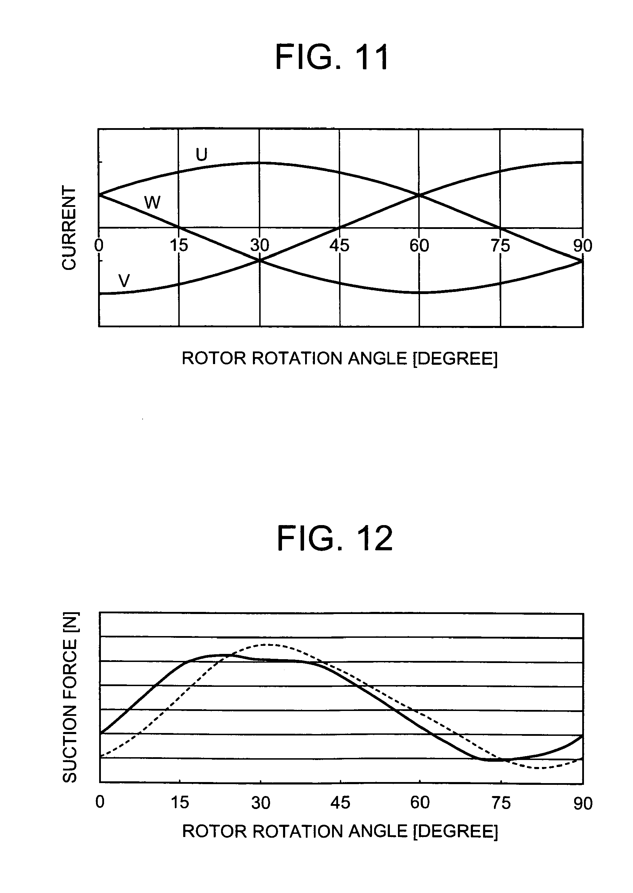

FIG. 11 is a diagram showing a three-phase sinusoidal wave, and in this case, FIG. 12 shows the variance of a suction force generated among the tooth portions 26 of the stator core 25 and the permanent magnets of the rotor 5 (a broken line shows that the conventional rotor 205 is used, and a solid line shows that the rotor 5 of the present embodiment is used). As shown in FIG. 12, in the structure of the embodiment in which the present invention is employed, it has been seen that the maximum value of the suction force decreases and the minimum value of the suction force increases as compared with the conventional structure. Therefore, it is seen from FIG. 12 that the variance of the suction force decreases in the present embodiment as compared with the conventional structure.

As described above in detail, according to the present invention, while taking the efficiency into consideration, the magnetic force lines generated by the permanent magnets can be scattered to suppress the periodically generated suction force, whereby the deformation of the stator core can be decreased. In consequence, the noises can be decreased without excessively deteriorating the efficiency.

Moreover, the above invention is effective in a case where the permanent magnets 37 to 44 are rare earth magnets. That is, the rare earth magnets increase material cost and processing cost, and are used mainly in a planar shape (a flat plate-like shape). Therefore, the above invention is especially effective in a case where the permanent magnets 37 to 44 are the rare earth magnets. In particular, the rare earth permanent magnet has a magnet holding force larger than that of a ferrite permanent magnet having the same shape, and hence has problems that excitation of the stator due to the suction force increases and that the vibration is transmitted to a surrounding area, thereby increasing the noises. However, according to the present invention, the noises can effectively be suppressed while taking the efficiency into consideration.

Furthermore, when the outer peripheral surface of the rotor core 30 is provided with the cutout portions S as described above, the variance of the magnetic force line can be optimized, and the vibration of the stator 4 can be decreased.

(Embodiment 2)

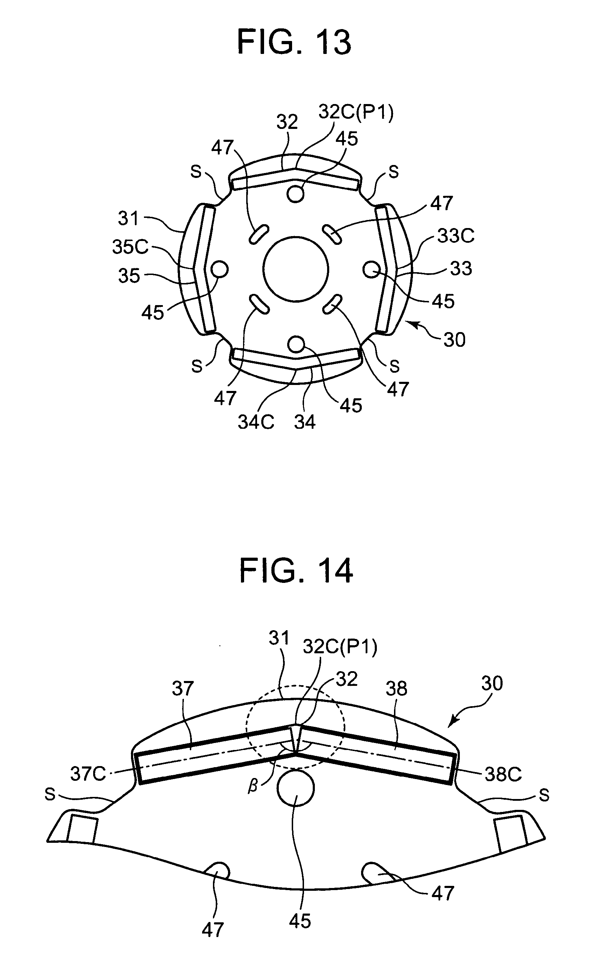

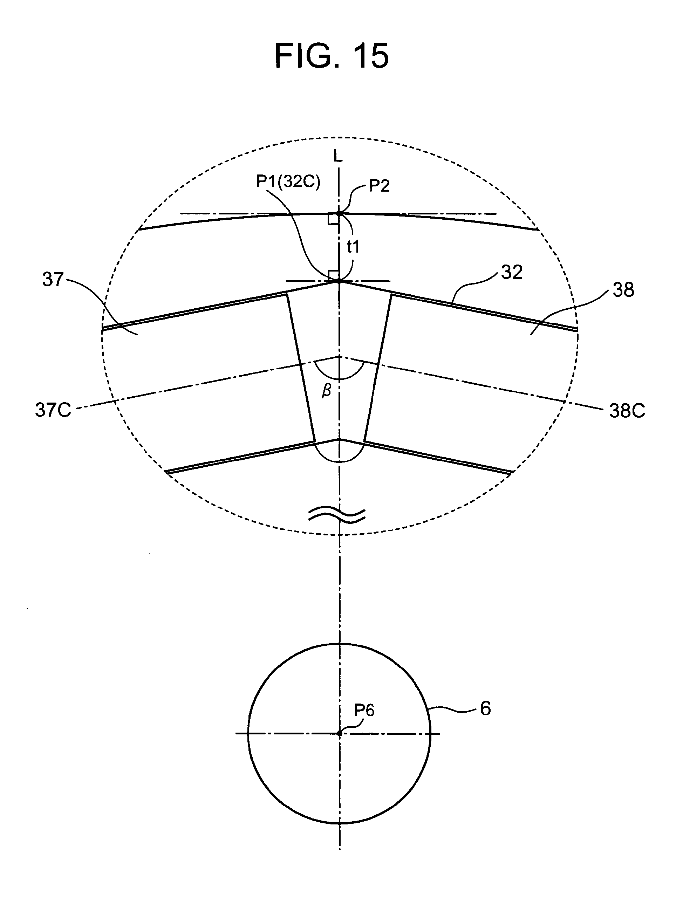

It is to be noted that in the above embodiment, as shown in FIG. 3, the rotor core 30 is provided with the insertion holes 37A to 44A exclusively used for the permanent magnets 37 to 44, respectively, but the present invention is not limited to this embodiment. As shown in, for example, FIGS. 13 and 14, insertion holes may be formed into such a V-shape as to project toward the outer periphery of the rotor core 30. Specifically, insertion holes 32 to 35 are formed so that centers (hereinafter referred to as the outer ends) 32C to 35C of the insertion holes 32 to 35 are positioned on the most distant outer peripheral side when seen from a rotary shaft 6 side and so that each insertion hole extends to both sides so as to tilt inwardly (the rotary shaft 6 side) from each of the outer ends 32C to 35C symmetrically with respect to a straight line (e.g., a broken line L shown in FIG. 15) connecting the axial center of the rotary shaft 6 to each of the outer ends 32C to 35C.

It is to be noted that here, with reference to FIGS. 14 and 15, the insertion hole 32 constituting one of four magnetic poles of a rotor 5 and a pair of permanent magnets 37, 38 inserted into the insertion hole 32 will be described, and the description of the other insertion holes 33 to 35 and permanent magnets 39 to 44 inserted into the insertion holes 33 to 35 is omitted, but the insertion holes 33 to 35 and the permanent magnets 39 to 44 have constitutions and arrangements similar to those of the insertion hole 32 and the permanent magnets 37, 38. Moreover, in FIGS. 13 to 15, the same reference numerals as those of FIGS. 1 to 12 indicate the same or similar functions or effects, and hence the description thereof is omitted.

In this case, the insertion hole 32 is formed so as to satisfy the above formula (1), in which t1 is the shortest distance from the outer end 32C of the insertion hole 32 (i.e., P1 shown in FIG. 15) to an outer periphery P2 of the rotor core 30 and t2 is the width dimension of the permanent magnet. It is to be noted that as shown in FIG. 15, in the present embodiment, an outer end P1 of the insertion hole 32, the outer periphery P2 of the rotor core 30 and an axial center P6 of the rotary shaft 6 are present on substantially the same straight line L.

In this way, also in the constitution of the present embodiment, while taking an efficiency into consideration, magnetic force lines generated by the permanent magnets 37 to 44 can be scattered to suppress a periodically generated suction force, and the deformation of a stator core can be decreased in the same manner as in Embodiment 1 described above. In consequence, noises can be decreased without excessively deteriorating the efficiency.

Moreover, in the above embodiments, as the electric motor, the four-pole permanent magnet rotary type electric motor is used in which a ratio between the number of poles of the rotor 5 and the number of slots of the stator 4 is 2:3, but in the present invention, the number of the poles of the rotor and the number of the slots of the stator are not limited to those of the above embodiments. For example, a six-pole permanent magnet rotary type electric motor may be used in which a ratio between the number of poles of a rotor and the number of slots of a stator is 2:3. Furthermore, even when an electric motor having another ratio or another number of poles is used, the present invention is valid.

**Claims**

1. A rotor of an electric motor, comprising: a rotor core formed by laminating a plurality of iron plates for the rotor; a pair of insertion holes corresponding to each magnetic pole of the rotor core and provided along the axial direction of a rotary shaft; and a pair of flat plate-like permanent magnets inserted into the insertion holes to constitute the magnetic pole,
   wherein the pair of insertion holes are disposed in the form of a slanted roof when seen from the side of the rotary shaft, and $0.197 \leq t1/t2 \leq 0.275$ is satisfied in which t1 is the shortest distance from the center of a line connecting outer ends of the adjacent insertion holes to the outer periphery of the rotor core and t2 is a width dimension of each of the permanent magnets.

2. A rotor of an electric motor, comprising: a rotor core formed by laminating a plurality of iron plates for the rotor; a pair of insertion holes corresponding to each magnetic pole of the rotor core and provided along the axial direction of a rotary shaft; and a pair of flat plate-like permanent magnets inserted into the insertion holes to constitute the magnetic pole,
   wherein the pair of insertion holes are disposed in the form of a slanted roof when seen from the side of the rotary shaft, and $3.15 \text{ mm} \leq t1 \leq 3.85 \text{ mm}$, $14 \text{ mm} \leq t2 \leq 16 \text{ mm}$ are satisfied in which t1 is the shortest distance from the center of a line connecting outer ends of the adjacent insertion holes to the outer periphery of the rotor core and t2 is a width dimension of each of the permanent magnets.

3. A rotor of an electric motor, comprising: a rotor core formed by laminating a plurality of iron plates for the rotor; insertion holes corresponding to magnetic poles of the rotor core and provided along the axial direction of a rotary shaft; and a pair of flat plate-like permanent magnets inserted into each of the insertion holes to constitute the magnetic pole,
   wherein the insertion holes are formed into such a V-shape as to project toward the outer periphery of the rotor core, and $0.197 \leq t1/t2 \leq 0.275$ is satisfied in which t1 is the shortest distance from the outer end of the insertion hole to the outer periphery of the rotor core and t2 is a width dimension of each of the permanent magnets.

4. A rotor of an electric motor, comprising: a rotor core formed by laminating a plurality of iron plates for the rotor; insertion holes corresponding to magnetic poles of the rotor core and provided along the axial direction of a rotary shaft; and a pair of flat plate-like permanent magnets inserted into each of the insertion holes to constitute the magnetic pole,
   wherein the insertion holes are formed into such a V-shape as to project toward the outer periphery of the rotor core, and $3.15 \text{ mm} \leq t1 \leq 3.85 \text{ mm}$, $14 \text{ mm} \leq t2 \leq 16 \text{ mm}$ are satisfied in which t1 is the shortest distance from the outer end of the insertion hole to the outer periphery of the rotor core and t2 is a width dimension of each of the permanent magnets.

5. The rotor of the electric motor according to any one of claims 1 to 4, wherein the permanent magnets are rare earth magnets.

6. The rotor of the electric motor according to any one of claims 1 to 5, wherein the outer peripheral surface of the rotor core in front of the magnetic pole in a rotating direction thereof is provided with cutout portions.

EP 2 270 955 A2

# FIG. 1

# FIG. 2

# FIG. 3

# FIG. 4

# FIG. 5

# FIG. 6

# FIG. 7

# FIG. 8

| | |
|---|---|
| 0 DEGREE | (1) |
| 15 DEGREE | (2) |
| 30 DEGREE | (3) |

EP 2 270 955 A2

# FIG. 9

| | CONVENTIONAL | PRESENT EMBODIMENT (PRESENT INVENTION) |
|---|---|---|
| 0 DEGREE | (1)<br>4<br>205 | (1)<br>5<br>4 |
| 15 DEGREES | (2)<br>205<br>4 | (2)<br>5<br>4 |
| 30 DEGREES | (3)<br>4<br>205 | (3)<br>4<br>5 |

16

# FIG. 10

| | CONVENTIONAL | PRESENT EMBODIMENT (PRESENT INVENTION) |
|---|---|---|
| 0 DEGREE | | |
| 15 DEGREES | | |
| 30 DEGREES | | |

# FIG. 11

ROTOR ROTATION ANGLE [DEGREE]

# FIG. 12

ROTOR ROTATION ANGLE [DEGREE]

# FIG. 13

# FIG. 14

# FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007174776 A
- JP 2008022666 A